# EUROPÄISCHE PATENTANMELDUNG

(11) **EP 1 228 943 A1**
(43) Veröffentlichungstag der Anmeldung: **07.08.2002**
(21) Anmeldenummer: 02002145.7
(22) Anmeldetag: 29.01.2002
(51) Int. Cl.: B62D 25/06, B62D 27/02, B60R 9/058

(54) **Fahrzeugdach**

(30) Priorität: 06.02.2001 DE 10105166
(71) Anmelder: JAC Products Deutschland GmbH, 42285 Wuppertal (DE)
(72) Erfinder: Lumpe, Karl-Heinz, 45749 Sprockhövel (DE); Gross, Michael, 44809 Bochum (DE); Kolodziej, Klaus, 42329 Wuppertal (DE)
(74) Vertreter: Rehders, Jochen, Dipl.-Ing.

(57) **Zusammenfassung**

Beschrieben wird ein Fahrzeugdach für einen Personenkraftwagen od. dgl. mit einem Dachblech (1), dessen Längsränder (2) jeweils an einem Längsträger (3) des Dachrahmens der Fahrzeugkarosserie befestigbar sind. Bei diesem Fahrzeugdach ist erfindungsgemäß vorgesehen, dass das Dachblech (1) zur zusätzlichen Abstützung und Befestigungsanordnung an den Längsträgern (3) des Dachrahmens an jeder Längsrandseite einen Schenkel (4) eines Winkelblechs (5) in unlösbarer Anordnung trägt, dessen jeweils anderer Schenkel (6) an jeweils einem der Längsträger (3) befestigbar ist.

## Beschreibung

Die Erfindung bezieht sich auf ein Fahrzeugdach für einen Personenkraftwagen, wie Limousine, Kombi, Van oder Kleinbus mit einem Dachblech, dessen Längsränder jeweils an einem Längsträger des Dachrahmens der Fahrzeugkarosserie befestigbar sind.

Beim Aufbau einer Fahrzeugkarosserie wird herkömmlicherweise eine Schweißverbindung zwischen dem Fahrzeugdach und dem Dachrahmen vorgesehen. Solche Schweißverbindungen werden in jüngerer Zeit zunehmend durch Klebeverbindungen ersetzt. Dabei ergeben sich gewisse Schwierigkeiten, beispielsweise dann, wenn der Klebeverbund während der Aushärtezeit des eingesetzten Klebstoffs Erschütterungen ausgesetzt wird, was sich beim Transport der Karosserie auf dem Montageband aber nicht verhindern lässt, es sei denn, dass von langen Aushärte- und damit Wartezeiten Gebrauch gemacht wird.

Der vorliegenden Erfindung liegt nun die Aufgabe zugrunde, die Befestigung eines Fahrzeugdachs an den Längsträgern eines Dachrahmens zu vereinfachen, dabei das Dachblech zu versteifen und mit minimalem Aufwand dafür Sorge zu tragen, dass das Dachblech nach einem Verkleben mit den Längsträgern des Dachrahmens auch schon dann fest mit dem Dachrahmen verbunden ist, wenn sich der eingesetzte Klebstoff noch in der Aushärtephase befindet.

Zur Lösung dieser Aufgabe ist erfindungsgemäß vorgesehen, dass das Dachblech zur zusätzlichen Abstützung und Befestigungsanordnung an den Längsträgern des Dachrahmens an jeder Längsrandseite einen Schenkel wenigstens eines Winkelblechs in unlösbarer Anordnung trägt, dessen jeweils anderer Schenkel an jeweils einem der Längsträger wenigstens im Bereich der A-, B-, C- und D-Säule befestigbar ist, wobei das Dachblech an den Längsrandbereichen durch Stopfen od. dgl. verschließbare Öffnungen aufweist, die auch die am Dachblech anliegenden Schenkel der Winkelbleche durchsetzen und die zum Einführen von Befestigungsbolzen von Dachrelings, Dachlastenquerträgern od. dgl. dienen, wobei im Bereich der Öffnungen der am Dachblech anliegenden Schenkel der Winkelbleche Gewindeeinzüge, Schweiß- oder Einpressmuttern für die darin einschraubbaren Befestigungsbolzen angeordnet sind.

Damit ist das Dachblech von vorneherein zur Befestigungsaufnahme von z.B. Dachrelings ausgebildet, und zwar in Bereichen, die eine Einleitung der Dachlast in die Winkelbleche und über diese in die Längsträger des Dachrahmens ermöglichen.

Die Erfindung besteht demnach im wesentlichen darin, dass für ein Fahrzeugdach ein Dachblech mit daran integrierten Winkelblechen zur Verfügung gestellt wird, deren freie Schenkel an den Längerträgern zu befestigen sind, und zwar zusätzlich zur Klebeverbindung zwischen dem Dachblech und den Längsträgern des Dachrahmens. Es können zwei sich über im wesentlichen die gesamte Länge des Dachblechs erstreckende Winkelbleche vorgesehen sein. Bevorzugterweise sind kurze Winkelbleche nur in den Bereichen der A-, B-, C- und, soweit vorhanden, der D-Säule vorgesehen. Der besondere Vorteil dieser erfindungsgemäßen Maßnahme ist, dass das Dachblech nach dem Verkleben mit den Längsträgern in den Bereichen der A-, B-, C- und D-Säulen oder auch mit dem gesamten Dachrahmen der Fahrzeugkarosserie über die Winkelbleche fest mit dem Dachrahmen verbindbar ist, so dass der Klebeverbund zwischen dem Dachblech und dem Dachrahmen während der Aushärtezeit des eingesetzten Klebstoffs auch durch Erschütterungen der Karosserie beim Transport auf dem Montageband nicht beeinträchtigt werden kann. Ein weiterer besonderer Vorteil der Erfindung besteht darin, dass eine Dachlast nicht in das Dachblech eingeleitet wird sondern über die Winkelbleche in den wesentlich stabileren Dachrahmen, insbesondere die A-, B-, C-, D-Säulen der Fahrzeugkarosserie.

Eine bevorzugte Verwirklichungsform der Erfindung besteht darin, dass die an den Längsträgern befestigbaren Schenkel der Winkelbleche über Schraubverbindungen an den Längsträgern befestigbar sind, und die genannten Schenkel der Winkelbleche und die Längsträger miteinander fluchtende Öffnungen zum Durchführen von Gewindebolzen und die Längsträger Gewindedurchzüge, Schweißoder Einpressmuttern zum Einschrauben der Gewindebolzen aufweisen.

Bei engen baulichen Verhältnissen kann es zwecks einfacher Montierbarkeit des Fahrzeugdachs von Vorteil sein, wenn gemäß einer Weiterbildung der Erfindung vorgesehen wird, dass die Schenkel der Winkelbleche über ein Gelenk scharnierartig miteinander verbunden sind.

Einem Bestreben der Automobilbauer zukünftig verstärkt modulare Fahrzeugbauteile einzusetzen, wird durch eine Weiterbildung der Erfindung, die darin besteht, dass das Dachblech mit den daran angeordneten Winkelblechen und zusammen mit einem am Dachblech festgelegten Dachhimmel eine vorgefertigte Montageeinheit bildet, Rechnung getragen. Dabei kann der Dachhimmel mit einem Dachhimmelbezug und/oder mit Innenraumverkleidungen, Sonnenblenden, Innenrückblickspiegel, Innenraumbeleuchtungseinrichtungen, Verkabelungen, Bedien- und Anzeigeelemente, Schiebe- oder Sonnendach und deren Rahmenteile und Antriebselemente, Haltegriffe u. dgl. versehen sein.

Die Erfindung wird nachfolgend anhand der Zeichnungen näher erläutert, und es zeigen:
- Fig. 1: ein erstes Ausführungsbeispiel und
- Fig.2: ein zweites Ausführungsbeispiel eines Fahrzeugdachs gemäß der Erfindung.

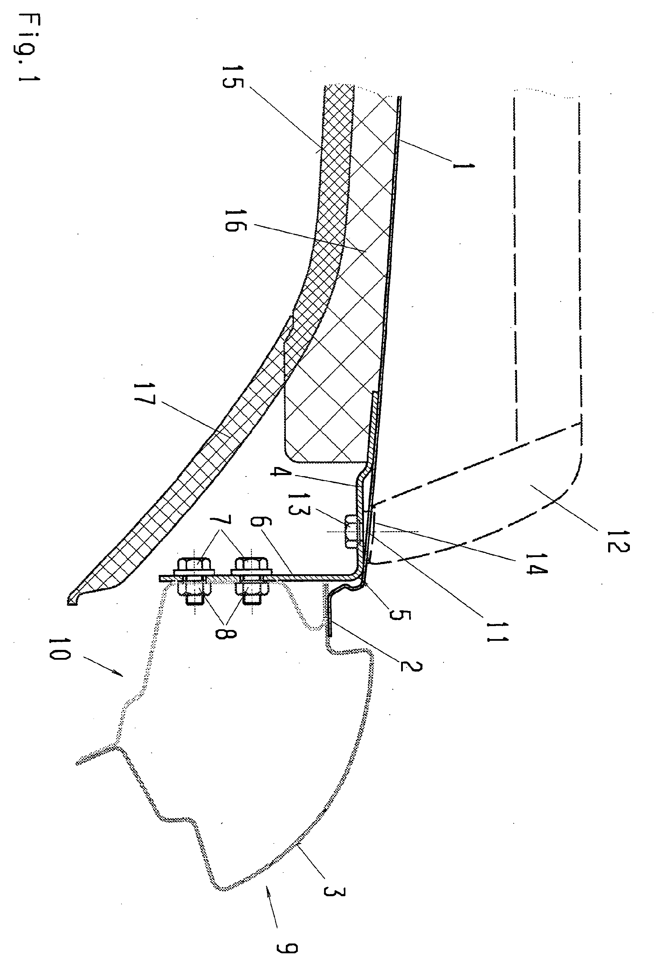

Fig. 1 zeigt im Schnitt einen seitlichen Längsrandbereich eines Fahrzeugs im Fahrzeugdachbereich und lässt das Dachblech 1 eines Fahrzeugdachs erkennen. Der andere, nicht gezeigte Längsrandbereich ist spiegelbildlich zum gezeigten ausgebildet. Das Dachblech 1 ist an den Längsrandbereichen stufenförmig abgesetzt und mit den Längsrändern 2 jeweils auf einen Längsträger 3 eines nicht näher dargestellten Dachrahmens abgestützt. Zwischen den Längsrändern 2 des Dachblechs 1 und den Längsträgern 3, von denen nur einer dargestellt ist, besteht bevorzugterweise eine Klebeverbindung.

Das Dachblech 1 trägt zur zusätzlichen Abstützung und Befestigungsanordnung an den Längsträgern 3 an jeder Längsrandseite einen Schenkel 4 wenigstens eines Winkelblechs 5 in unlösbarer Anordnung. Bevorzugt sind die Schenkel 4 der Winkelbleche 5 ans Dachblech 1 angeklebt. Die jeweils anderen Schenkel 6 der Winkelbleche 5 sind an jeweils einem der Längsträger 3 befestigbar, und zwar bevorzugterweise - wie dargestellt - über Schraubverbindungen. Dafür weisen die Schenkel 6 der Winkelbleche 5 und die Längsträger 3 miteinander fluchtende Öffnungen zum Durchführen von Gewindebolzen 7 auf und an den Längsträgern 3 sind Gewindedurchzüge oder Schweißmuttern oder Einpressmuttern 8 vorgesehen. Die Längsträger 3 können jeweils aus einem außen liegenden Seitenwandrahmenteil 9 und einer die Einpressmuttern 8 tragenden Verstärkungsbzw. innen liegenden Seitenwandrahmenteil 10 bestehen.

Die Winkelbleche 5 können sich über im wesentlichen die gesamte Länge des Dachblechs 1 erstrecken. Sie können aber auch nur im Bereich der A-, B-, C-, und soweit vorhanden, D-Säulen vorgesehen sein und nur dort mit diesen verschraubt sein.

Das Dachblech 1 weist an den Längsrandbereichen Öffnungen 11 auf, die auch die am Dachblech 1 anliegenden Schenkel 4 der Winkelbleche 5 durchsetzen und die zum Durchführen von nicht gezeigten Befestigungsbolzen von Dachrelings, gestrichelt angedeuteten Dachlastenquerträgern 12 od. dgl. dienen. Für die Befestigungsbolzen sind Gewindedurchzüge, Schweiß- oder Einpressmuttern 13 im Bereich der Öffnungen der am Dachblech 1 anliegenden Schenkel 4 der Winkelbleche 5 vorgesehen. Wie die Zeichnung erkennen lässt, wird eine Dachlast über die Winkelbleche 5 in die Längsträger 3 eingeleitet, so dass das Dachblech 1 im wesentlichen unbelastet bleibt. Bei Nichtgebrauch einer Dachreling oder von Dachlastenquerträgern 12 lassen sich die Öffnungen 11 in einfachster Weise mittels eines gestrichelt angedeuteten Stopfens 14 verschließen.

Das Fahrzeugdach weist zudem die Besonderheit auf, dass das Dachblech 1 mit den daran angeordneten Winkelblechen 5 und zusammen mit einem am Dachblech 1 festgelegten Dachhimmel 15 eine vorgefertigte Montageeinheit bildet, die als Dachmodul an der Fahrzeugkarosserie wie gezeigt anzuordnen ist. Das Dachmodul besteht aus dem Dachblech 1, den Winkelblechen 5, dem Dachhimmel 15 und einer Zwischenlage 16 zwischen Dachblech 1 und Dachhimmel 15. Das Dachmodul weist somit einen Sandwichaufbau auf, wobei die Zwischenlage 16 z.B. aus Schaumkunststoff besteht. Zwischen dem Dachblech 1 und der Zwischenlage 16 einerseits wie auch zwischen der Zwischenlage 16 und dem Dachhimmel 15 andererseits können Klebeverbindungen vorgesehen sein, wobei sowohl physikalisch als auch chemisch abbindende Klebstoffe zum Einsatz kommen können. An den Dachhimmel 15 kann sich eine Dachrahmen- oder Säulenverkleidung 17 anschließen.

Wenn auch im einzelnen nicht dargestellt, kann das Dachmodul eines oder mehrere Anbauteile in vormontierter Anordnung aufweisen. Hierzu gehören beispielsweise ein Dachhimmelbezug, Innenraumverkleidungen, Sonnenblenden, Innenbeleuchtungseinrichtungen, Haltegriffe u. dgl. mehr.

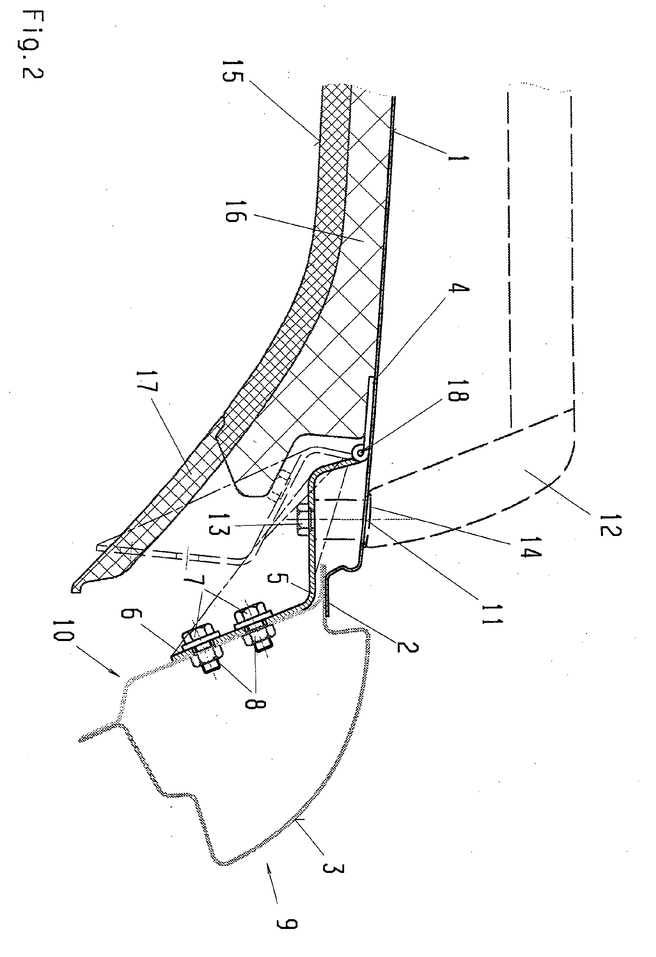

Das Ausführungsbeispiel der Erfindung nach Fig. 2 entspricht im wesentlichen dem nach Fig. 1, so dass auch übereinstimmende Bezugszeichen verwendet wurden. Der einzige, allerdings wesentliche Unterschied besteht darin, dass die Schenkel 4 und 6 der Winkelbleche 5 über ein Gelenk 18 scharnierartig miteinander verbunden sind. Hierdurch kann das Fahrzeugdach auch bei schwierigen Einbausituationen, z.B. wie in Fig. 2 gezeigt, von oben her montiert werden.

## Patentansprüche

1. Fahrzeugdach für einen Personenkraftwagen od. dgl. mit einem Dachblech (1),dessen Längsränder (2) jeweils an einem Längsträger (3) des Dachrahmens der Fahrzeugkarosserie befestigbar sind, das zur zusätzlichen Abstützung und Befestigungsanordnung an den Längsträgern (3) des Dachrahmens an jeder Längsrandseite einen Schenkel (4) wenigstens eines Winkelblechs (5) in unlösbarer Anordnung trägt, dessen jeweils anderer Schenkel (6) an jeweils einem der Längsträger (3) im Bereich der A-, B-, C- und D-Säule befestigbar ist, wobei das Dachblech (1) an den Längsrandbereichen durch Stopfen od. dgl. verschließbare Öffnungen (11) aufweist, die auch die am Dachblech (1) anliegenden Schenkel (4) der Winkelbleche (5) durchsetzen und die zum Einführen von Befestigungsbolzen von Dachrelings, Dachlastenquerträgern (12) od. dgl. dienen, wobei im Bereich der Öffnungen (11) der am Dachblech (1) anliegenden Schenkel (4) der Winkelbleche (5) Gewindeeinzüge, Schweiß- oder Einpressmuttern (13) für die darin einschraubbaren Befestigungsbolzen angeordnet sind.

2. Fahrzeugdach nach Anspruch 1, **dadurch gekennzeichnet, dass** die an den Längsträgem (3) befestigbaren Schenkel (6) der Winkelbleche (5) über Schraubverbindungen an den Längsträgern (3) befestigbar sind, wobei die genannten Schenkel (6) der Winkelbleche (5) und die Längsträger (3) miteinander fluchtende Öffnungen zum Durchführen von Gewindebolzen (7) und die Längsträger (3) Gewindedurchzüge, Schweiß- oder Einpressmuttern (8) zum Einschrauben der Gewindebolzen (7) aufweisen.

3. Fahrzeugdach nach Anspruch 1 oder 2, bei dem die Schenkel (4, 6) der Winkelbleche (5) über ein Gelenk (18) scharnierartig miteinander verbunden sind.

4. Fahrzeugdach nach einem der vorangegangenen Ansprüche,bei dem das Dachblech (1) mit den daran angeordneten Winkelblechen (5) und zusammen mit einem am Dachblech (1) festgelegten Dachhimmel (15) eine vorgefertigte Montageeinheit bildet.

5. Fahrzeugdach nach Anspruch 4, bei dem der Dachhimmel (15) mit einem Dachhimmelbezug und/oder mit Innenraumverkleidungen, Sonnenblenden, Innenrückblickspiegel, Innenbeleuchtungseinrichtungen, Verkabelungen, Bedien- und Anzeigeelemente, Schiebe- oder Sonnendach und deren Rahmenteile und Antriebselemente, Haltegriffe u. dgl. versehen ist.
